# EUROPEAN PATENT APPLICATION

(11) **EP 4 844 459 A1**
(43) Date of publication of application: **25.11.2026**
(21) Application number: 25751076.8
(22) Date of filing: 13.01.2025
(51) Int. Cl.: G02B 6/12

(54) **OPTICAL CHIP STRUCTURE, MANUFACTURING METHOD, AND WAVELENGTH DIVISION MULTIPLEXING SYSTEM**

(30) Priority: 06.02.2024 CN 202410173889
(71) Applicant: Huawei Technologies Co., Ltd., Shenzhen, Guangdong 518129 (CN)
(72) Inventor: FAN, Donghui, Shenzhen, Guangdong 518129 (CN); LI, Sanxing, Shenzhen, Guangdong 518129 (CN); WEN, Yue, Shenzhen, Guangdong 518129 (CN); WANG, Qian, Shenzhen, Guangdong 518129 (CN)
(74) Representative: Huawei European IPR
(86) International application number: PCT/CN2025/072016
(87) International publication number: WO 2025/167474

(57) **Abstract**

An optical chip structure, a manufacturing method, and a wavelength division multiplexing system are provided, and relate to the field of optical communication technologies. The optical chip structure includes a first optical waveguide (102), a second optical waveguide (103), a dielectric layer (104), and a filter layer (105). The first optical waveguide (102) and the second optical waveguide (103) are respectively connected to a first end of the dielectric layer (104), and ends that are of the first optical waveguide (102) and the second optical waveguide (103) and that are connected to the dielectric layer (104) are spaced apart. A width of the dielectric layer (104) is greater than a width of the first optical waveguide (102) and a width of the second optical waveguide (103). A second end that is of the dielectric layer (104) and that is opposite to the first end is plated with the filter layer (105). Transition transmission of an optical signal is implemented by using the dielectric layer (104). The optical signal may not be directly reflected to the second optical waveguide (103) at an exit of the first optical waveguide (102). After emitted from the first optical waveguide (102), the optical signal can be reflected at the filter layer (105) after passing through the dielectric layer (104), and then incident on the second optical waveguide (103) through the dielectric layer (104). In addition, the first optical waveguide (102) and the second optical waveguide (103) are spaced apart. In this way, signal crosstalk at the exit of the first optical waveguide (102) and an entrance of the second optical waveguide (103) can be reduced.

## Description

This application claims priority to Chinese Patent Application No. 202410173889.7, filed with the China National Intellectual Property Administration on February 6, 2024, and entitled "OPTICAL CHIP STRUCTURE, MANUFACTURING METHOD, AND WAVELENGTH DIVISION MULTIPLEXING SYSTEM", which is incorporated herein by reference in its entirety.

### TECHNICAL FIELD

This application relates to the field of optical communication technologies, and specifically, to an optical chip structure, a manufacturing method, and a wavelength division multiplexing system.

### BACKGROUND

Wavelength division multiplexing WDM (Wavelength Division Multiplexing) is a technology of converging two or more optical signals (carrying various information) with different wavelengths at a transmitter via a multiplexer (also referred to as a mux, Multiplexer), and coupling the optical signals to a same optical fiber of an optical line for transmission. At a receiver, the optical signals with different wavelengths are separated via a demultiplexer (also referred to as a wavelength demultiplexer or a demux, Demultiplexer), and then are further processed by an optical receiver to restore the original signals. This technology of simultaneous transmission of two or more optical signals with different wavelengths in a same optical fiber is referred to as wavelength division multiplexing.

In the conventional technology, an incident waveguide and a reflected waveguide are separately connected to a filter, and the optical signals are filtered through the filter, so that an optical signal with a specific wavelength is reflected or transmitted. Because a distance between the incident waveguide and the reflected waveguide is too short, strong crosstalk exists near an intersection point of the incident waveguide and the reflected waveguide.

### SUMMARY

In view of this, this application provides an optical chip structure, a manufacturing method, and a wavelength division multiplexing system, to increase a distance between an incident waveguide and a reflected waveguide, thereby reducing signal crosstalk between the incident waveguide and the reflected waveguide.

According to a first aspect of embodiments of this application, an optical chip structure is provided. The optical chip structure includes a first optical waveguide, a second optical waveguide, a dielectric layer, and a filter layer. The first optical waveguide and the second optical waveguide are respectively connected to a first end of the dielectric layer, and ends that are of the first optical waveguide and the second optical waveguide and that are connected to the dielectric layer are spaced apart. A width of the dielectric layer is greater than a width of the first optical waveguide and a width of the second optical waveguide. A second end that is of the dielectric layer and that is opposite to the first end is plated with the filter layer. The first optical waveguide is for inputting an optical signal, the filter layer is for reflecting an optical signal in a first band and for transmitting an optical signal in a second band, and the second optical waveguide is for transmitting the optical signal reflected by the filter layer.

The first optical waveguide and the second optical waveguide are separately connected to the dielectric layer, and transition transmission of an optical signal is implemented by disposing the dielectric layer. The optical signal may not be directly reflected to the second optical waveguide at an exit of the first optical waveguide. After emitted from the first optical waveguide, the optical signal can be reflected at the filter layer after passing through the dielectric layer, and then incident on the second optical waveguide through the dielectric layer. In addition, the first optical waveguide and the second optical waveguide are spaced apart. In this way, signal crosstalk at the exit of the first optical waveguide and an entrance of the second optical waveguide can be reduced.

In a possible implementation, the optical chip structure further includes a substrate and a cladding. The first optical waveguide, the second optical waveguide, and the dielectric layer are separately disposed on the substrate, the cladding covers an upper surface of the first optical waveguide, the second optical waveguide, and the dielectric layer, and refractive indexes of the first optical waveguide, the second optical waveguide, and the dielectric layer are greater than refractive indexes of the substrate and the cladding. The first optical waveguide, the second optical waveguide, and the dielectric layer are covered by the substrate and the cladding. In this way, it can be ensured that the optical signal is transmitted in the first optical waveguide, the second optical waveguide, and the dielectric layer.

In a possible implementation, an area of the end that is of the first optical waveguide and that is connected to the dielectric layer is greater than an area of the other end of the first optical waveguide. In this way, spot size expansion can be performed on the optical signal in the first optical waveguide, and mode spot broadening of the optical signal in the dielectric layer can be reduced.

In a possible implementation, a cross-sectional area from the end that is of the first optical waveguide and that is connected to the dielectric layer to the other end of the first optical waveguide gradually decreases. In this way, smooth transition of spot size expansion of the optical signal can be implemented.

In a possible implementation, a cross-sectional area from the end that is of the second optical waveguide and that is connected to the dielectric layer to the other end of the second optical waveguide gradually decreases. In this way, smooth transition of spot size reduction of the optical signal can be implemented.

In a possible implementation, an area of the end that is of the first optical waveguide and that is connected to the dielectric layer is less than an area of the end that is of the second optical waveguide and that is connected to the dielectric layer. In this way, it can be ensured that the first optical waveguide can still be incident to the second optical waveguide after being expanded in the dielectric layer.

In a possible implementation, the first optical waveguide, the second optical waveguide, and/or the dielectric layer are/is made of at least one of the following: silicon dioxide, lithium niobate, a III-V semiconductor compound, silicon oxynitride, and a polymer.

In a possible implementation, the first optical waveguide, the second optical waveguide, and/or the dielectric layer are/is made of doped silicon dioxide, and an impurity doped in the silicon dioxide includes at least one of the following: niobium, antimony, germanium, and phosphorus.

In a possible implementation, a length of the dielectric layer is less than a Rayleigh distance of an optical signal transmitted in the dielectric layer.

In a possible implementation, a spacing between a joint between the first optical waveguide and the dielectric layer and a joint between the second optical waveguide and the dielectric layer is greater than 1 micrometer.

In a possible implementation, there are a plurality of first optical waveguides and a plurality of second optical waveguides, and the plurality of first optical waveguides and the plurality of second optical waveguides are separately connected to the dielectric layer.

In a possible implementation, the optical chip structure further includes a first optical fiber array and a second optical fiber array. The first optical fiber array includes a first optical fiber and a second optical fiber, the first optical fiber is connected to the first optical waveguide, and the second optical fiber is connected to the second optical waveguide. The second optical fiber array includes a third optical fiber, and the third optical fiber is connected to an end that is of the filter layer and that is away from the first optical waveguide.

In a possible implementation, at least a part of the first optical waveguide and/or the second optical waveguide is in an arc shape or a straight line shape.

In a possible implementation, the refractive indexes of the first optical waveguide, the second optical waveguide, and the dielectric layer are the same.

In a possible implementation, the width of the dielectric layer is greater than or equal to a sum of the width of the first optical waveguide, the width of the second optical waveguide, and a spacing between the first optical waveguide and the second optical waveguide.

According to a second aspect of embodiments of this application, a manufacturing method for an optical chip structure is provided. The method includes: forming a substrate; forming a first optical waveguide, a second optical waveguide, and a dielectric layer on a surface of the substrate, where the first optical waveguide and the second optical waveguide are separately connected to a first end of the dielectric layer, a width of the dielectric layer is greater than a width of the first optical waveguide and a width of the second optical waveguide, and ends that are of the first optical waveguide and the second optical waveguide and that are connected to the dielectric layer are spaced apart; forming a cladding on an upper surface of the first optical waveguide, the second optical waveguide, and the dielectric layer, where refractive indexes of the first optical waveguide, the second optical waveguide, and the dielectric layer are greater than refractive indexes of the substrate and the cladding; and forming a filter layer on an end face of the cladding.

According to a third aspect of embodiments of this application, a wavelength division multiplexing system is provided. The wavelength division multiplexing system includes a signal receiver, a signal transmitter, and the optical chip structure according to any one of the possible implementations of the first aspect. The optical signal receiver receives an optical signal, and couples the optical signal to the optical chip structure, and the signal transmitter is configured to send the optical signal output by the optical chip structure.

### BRIEF DESCRIPTION OF DRAWINGS

FIG. 1(a) is a diagram of an optical chip structure according to an embodiment of this application;
FIG. 1(b) is a diagram of another optical chip structure according to an embodiment of this application;
FIG. 1(c) is a diagram of another optical chip structure according to an embodiment of this application;
FIG. 2 is a diagram of another optical chip structure according to an embodiment of this application;
FIG. 3 is a diagram of another optical chip structure according to an embodiment of this application;
FIG. 4 is a diagram of another optical chip structure according to an embodiment of this application;
FIG. 5 is a diagram of another optical chip structure according to an embodiment of this application;
FIG. 6 is a diagram of another optical chip structure according to an embodiment of this application;
FIG. 7 is a diagram of another optical chip structure according to an embodiment of this application;
FIG. 8 is a diagram of another optical chip structure according to an embodiment of this application;
FIG. 9(a) to FIG. 9(c) are diagrams of an optical chip structure progressively formed by using a manufacturing method for the optical chip structure according to an embodiment of this application;
FIG. 10 is a diagram of another optical chip structure according to an embodiment of this application;
FIG. 11 is a flowchart of a manufacturing method for an optical chip structure according to an embodiment of this application; and
FIG. 12 is a diagram of a wavelength division multiplexing system according to an embodiment of this application.

### DESCRIPTION OF EMBODIMENTS

The following describes the technical solutions in embodiments of this application with reference to the accompanying drawings in embodiments of this application.

For ease of understanding, the following first describes English abbreviations and related technical terms in embodiments of this application.

It should be noted that described embodiments are merely a part but not all of embodiments of this application. All other embodiments obtained by persons of ordinary skill in the art based on embodiments of this application without creative efforts shall fall within the protection scope of this application.

The terms used in embodiments of this application are merely for the purpose of illustrating specific embodiments, and are not intended to limit this application. The terms "a", "said" and "the" of singular forms used in embodiments and the appended claims of this application are also intended to include plural forms, unless otherwise specified in the context clearly.

It should be understood that the term "and/or" in this specification is merely a same field for describing associated objects and represents that three relationships may exist. For example, A and/or B may represent the following three cases: Only A exists, both A and B exist, and only B exists. In addition, the character "/" in this specification generally indicates an "or" relationship between the associated objects.

Depending on the context, for example, the word "if" used herein may be explained as "while", "when", "in response to determining", or "in response to detecting". Similarly, depending on the context, the phrase "if determining" or "if detecting (a stated condition or event)" may be explained as "when determining", "in response to determining", "when detecting (the stated condition or event)", or "in response to detecting (the stated condition or event)".

It should be understood that, "first", "second", and the like used in this application are merely used for distinguishing and description, but cannot be understood as an indication or implication of relative importance or an indication or implication of a sequence.

In descriptions of this application, orientation or position relationships indicated by terms "center", "upper", "lower", "front", "rear", "left", "right", "vertical", "horizontal", "top", "bottom", "inner", "outer", and the like are based on orientation or position relationships shown in the accompanying drawings, and are used only for ease and brevity of description of this application, rather than indicating or implying that a specified apparatus or component needs to have a specific orientation, and be constructed and operated in the specific orientation. Therefore, this cannot be understood as a limitation on this application.

In the descriptions of this application, it should be noted that, unless otherwise expressly specified and limited, terms such as "mounted", "interconnected", "connected", and "disposed" should be understood in a broad sense, for example, may be a fastened connection, a detachable connection, an abutting connection, or an integral connection. Persons of ordinary skill in the art may understand specific meanings of the foregoing terms in this application based on specific situations.

Wavelength division multiplexing (Wavelength Division Multiplexing, WDM) is an optical fiber transmission technology that allows a plurality of optical signals with different wavelengths to be coupled and transmitted through a same optical fiber. This method can increase an available bandwidth of the optical fiber, thereby reducing requirements for expensive optical fiber resources.

CWDM (Coarse Wavelength Division Multiplexing) is an optical communication technology. It multiplexes and demultiplexes optical signals by transmitting a plurality of optical signals with different wavelengths through a same optical fiber. The optical signals corresponding to different wavelengths are independent of each other, and can be simultaneously transmitted by using a wavelength division multiplexing technology, thereby improving a transmission capability of the optical fiber.

The following describes an application scenario of this application.

In a data center, CWDM can be used for communication between servers and connection to an external network. The CWDM technology can multiplex optical signals generated by different servers, conserving optical fiber resources and improving the overall transmission capability of the data center.

In a wireless communication network, CWDM can be used for optical transmission between base stations, and reduce a quantity of optical fibers and reduce construction costs by multiplexing optical signals generated by different base stations.

In a video surveillance system, CWDM can be used for transmission of video signals from a plurality of surveillance points to a central control room. The video signals can be multiplexed by using a CWDM technology, to reduce a quantity of optical fibers and reduce maintenance costs of a system.

In a high-speed broadband access network, CWDM can be used for allocating optical fibers to users. Optical signals generated by different users can be multiplexed by using the CWDM technology to improve a transmission capability of the access network.

In a DQ ODN application scenario of fiber detection, a multiplexer/demultiplexer module is required to separate detection light from service light. This application relates to a wavelength division multiplexing technology, to resolve crosstalk existing at an intersection of an incident waveguide and a reflected waveguide. Specifically, this application relates to an optical chip structure, a manufacturing method for an optical chip structure, and a wavelength division multiplexing system. An incident waveguide and a reflected waveguide are separately connected to a dielectric layer, so that the incident waveguide and the reflected waveguide are spaced apart, to increase a spacing between the incident waveguide and the reflected waveguide, and reduce crosstalk between the incident waveguide and the reflected waveguide. Optionally, this application may be applied to the CWDM field.

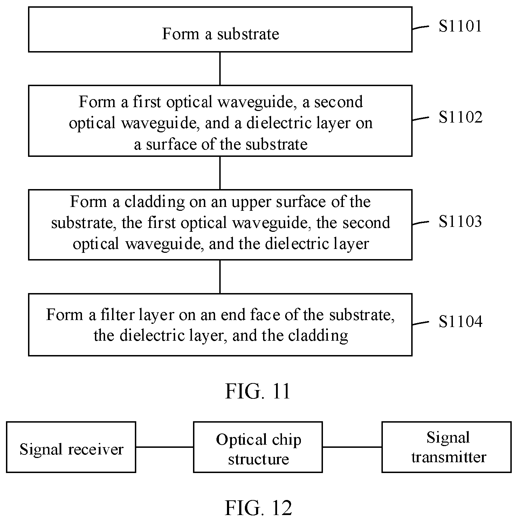

With reference to FIG. 12, a wavelength division multiplexing system includes a signal receiver, a signal transmitter, and the optical chip structure according to any one of the possible implementations of the first aspect. The optical signal receiver receives an optical signal, and couples the optical signal to the optical chip structure, and the signal transmitter sends the optical signal output by the optical chip structure.

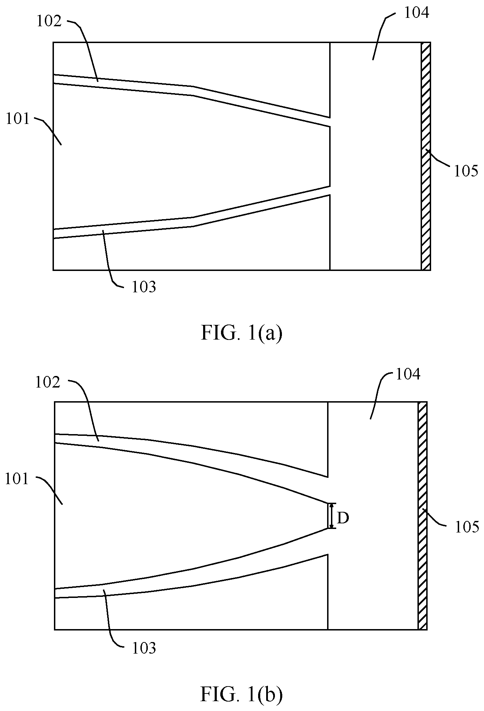

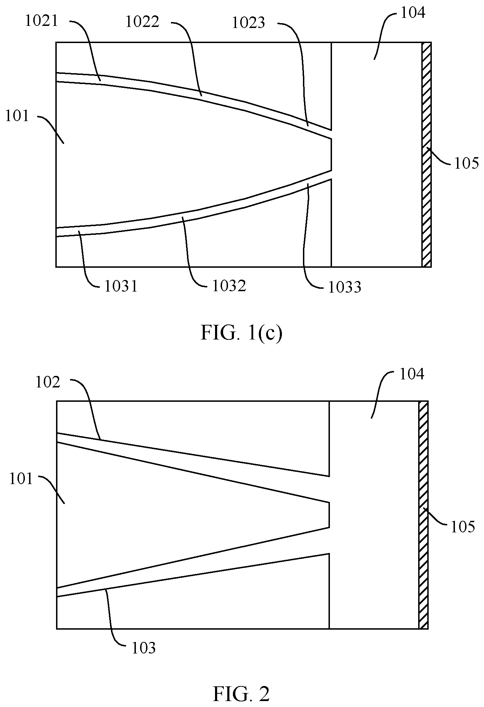

FIG. 1(a) to FIG. 1(c) and FIG. 2 are used as examples to explain in detail optical chip structures according to embodiments of this application. FIG. 1(a) to FIG. 1(c) and FIG. 2 are sectional views of different optical chip structures. FIG. 1(a) to FIG. 1(c) and FIG. 2 merely use connections between two optical waveguides and a dielectric layer 104 for description. The optical chip structure includes a first optical waveguide 102, a second optical waveguide 103, a dielectric layer 104, and a filter layer 105. The first optical waveguide 102 and the second optical waveguide 103 are separately connected to a first end of the dielectric layer 104, ends that are of the first optical waveguide 102 and the second optical waveguide 103 and that are connected to the dielectric layer 104 are spaced apart, and a second end that is of the dielectric layer 104 and that is opposite to the first end is plated with the filter layer 105.

The first optical waveguide 102 is for inputting an optical signal, and the second optical waveguide 103 is for transmitting an optical signal reflected by the filter layer 105. In other words, the first optical waveguide 102 is an incident waveguide, that is, a waveguide for transmitting an input optical signal, and the input herein may also be understood as being input to the dielectric layer 104; and the second optical waveguide is a reflected waveguide, that is, a waveguide for transmitting a reflected optical signal, and the reflected optical signal herein may also indicate an optical signal reflected by the filter layer 105. In an optional embodiment, the first optical waveguide 102 may also be a reflected waveguide, and the first optical waveguide 102 may also be an incident waveguide. For example, in an uplink case of an optical signal, the first optical waveguide 102 may be an incident waveguide, and the second optical waveguide 103 is a reflected waveguide; and in a downlink case of an optical signal, the second optical waveguide 103 is an incident waveguide, and the first optical waveguide 102 may also be a reflected waveguide.

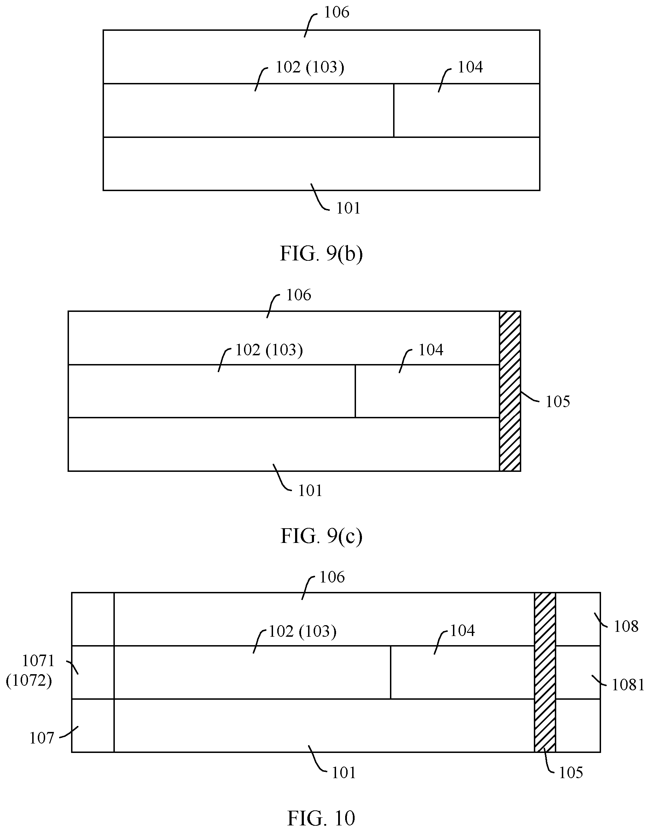

A width of the dielectric layer 104 is greater than a width of the first optical waveguide 102 and a width of the second optical waveguide 103. In this way, it can be ensured that the ends that are of the first optical waveguide 102 and the second optical waveguide 103 and that are connected to the dielectric layer 104 are spaced apart. As shown in FIG. 1(a) to FIG. 1(c) and FIG. 2, the widths of the first optical waveguide 102, the second optical waveguide 103, and the dielectric layer 104 all indicate a direction from top to bottom in FIG. 1(a) to FIG. 1(c) and FIG. 2. A length direction of the dielectric layer 104 indicates a direction from left to right in FIG. 1(a) and FIG. 2. Heights of the first optical waveguide 102, the second optical waveguide 103, and the dielectric layer 104 all indicate a direction perpendicular to a plane of FIG. 1(a) and FIG. 2, or a direction from top to bottom in FIG. 10.

The dielectric layer 104 may be configured to perform transition on an optical signal transmission path. In the dielectric layer 104, an optical signal is incident from a position at which the first optical waveguide 102 is connected to the dielectric layer 104, and on the filter layer 105 at an end opposite to that of the first optical waveguide 102, to transmit and reflect optical signals. The reflected optical signal may be incident on the second optical waveguide 103, and the transmitted optical signal may continue to be transmitted along an optical path.

The filter layer 105 is configured to reflect an optical signal in a first band and transmit an optical signal in a second band. In an embodiment, the filter layer 105 may use a thin film filter (Thin-film filter) to separate or multiplex optical signals with different wavelengths by using some optical characteristics of a special thin film material. In an implementation, the filter layer 105 may reflect an optical signal with a first wavelength and transmit the optical signal in the second band. The first wavelength may be a specific wavelength. In this way, the optical signal with the first wavelength can be separated, and optical signals other than the optical signal with the first wavelength can be transmitted. In an implementation, the filter layer 105 may reflect the optical signal in the first band and transmit an optical signal with a second wavelength. The second wavelength may be a specific wavelength. In this way, the optical signal with the second wavelength can be transmitted, and optical signals other than the optical signal with the second wavelength can be reflected. In an implementation, the filter layer 105 may transmit an optical signal of a part of energy, and reflect an optical signal of a part of energy, to reflect and transmit optical signal bands. In an implementation, the filter layer 105 may be formed by a plurality of layers of different transmission media, to reflect optical signals with a plurality of wavelengths or transmit optical signals with a plurality of wavelengths. In an implementation, the filter layer 105 may also be made of a fully transparent or fully reflective material.

The first optical waveguide 102 and the second optical waveguide 103 are separately connected to the dielectric layer 104, and transition transmission of an optical signal is implemented by disposing the dielectric layer 104. The optical signal may not be directly reflected to the second optical waveguide 103 at an exit of the first optical waveguide 102. After emitted from the first optical waveguide 102, the optical signal can be reflected at the filter layer 105 after passing through the dielectric layer 104, and then incident on the second optical waveguide 103 through the dielectric layer 104. In addition, the first optical waveguide 102 and the second optical waveguide 103 are spaced apart. In this way, signal crosstalk at the exit of the first optical waveguide 102 and an entrance of the second optical waveguide 103 can be reduced.

In an embodiment, as shown in FIG. 1(b), a spacing D between a joint between the first optical waveguide 102 and the dielectric layer 104 and a joint between the second optical waveguide 103 and the dielectric layer 104 is greater than or equal to 1 micrometer. The spacing refers to a distance between a surface of the first optical waveguide 102 and a surface of the second optical waveguide 103. When there are a plurality of first optical waveguides 102 and a plurality of second optical waveguides 103, a spacing between adjacent optical waveguides is greater than 1 micrometer. Theoretically, a maximum spacing between the first optical waveguide 102 and the second optical waveguide 103 may be infinite. However, in practice, considering that optical chip structures of different models may be different, the maximum spacing is not limited herein. Optionally, the spacing D between the joint between the first optical waveguide 102 and the dielectric layer 104 and the joint between the second optical waveguide 103 and the dielectric layer 104 may be less than 20 micrometers. For example, the spacing D may be 1 micrometer, 1.5 micrometers, 2 micrometers, 2.5 micrometers, 3 micrometers, or the like.

In an embodiment, the width of the dielectric layer 104 is greater than or equal to a sum of the width of the first optical waveguide 102, the width of the second optical waveguide 103, and the spacing D between the first optical waveguide 102 and the second optical waveguide 103. In other words, the dielectric layer 104 may be a rectangular area. When there are a plurality of first optical waveguides 102 and a plurality of second optical waveguides 103, the width of the dielectric layer 104 may be greater than or equal to a sum of widths of all optical waveguides and spacings between all adjacent waveguides.

In an embodiment, the first optical waveguide 102 or the second optical waveguide 103 may be a planar lightwave circuit (Planar Lightwave Circuit, PLC). Optionally, a height of the dielectric layer 104 may be the same as a height of the first optical waveguide 102 and a height of the second optical waveguide 103. This may facilitate processing and manufacturing.

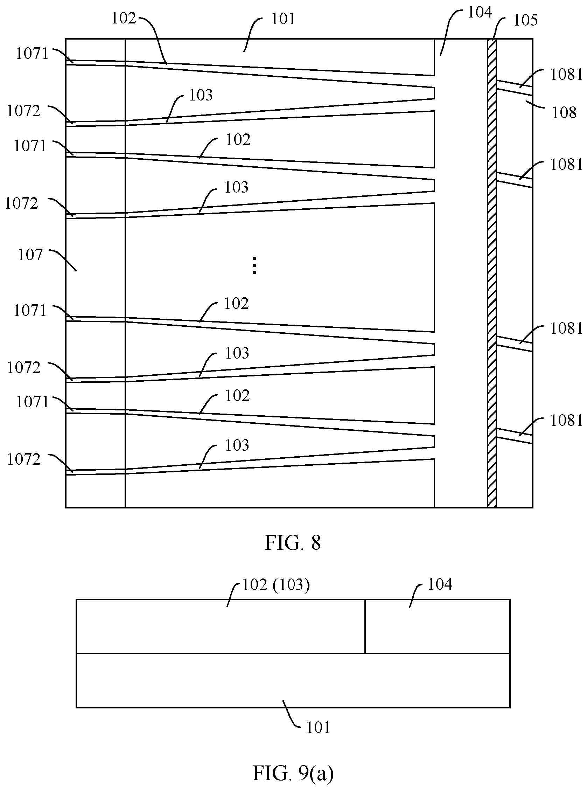

In an embodiment, as shown in FIG. 9(a), FIG. 9(b), and FIG. 9(c), the optical chip structure in this application further includes a substrate 101 and a cladding 106. The first optical waveguide 102, the second optical waveguide 103, and the dielectric layer 104 are separately disposed on the substrate 101, and the cladding 106 covers an upper surface of the first optical waveguide 102, the second optical waveguide 103, the dielectric layer 104, and the substrate 101. As shown in FIG. 9(c), the cladding 106 covers the upper surface of the substrate 101, and does not cut off an optical path. In other words, the first optical waveguide 102, the second optical waveguide 103, and the dielectric layer 104 are covered in upper and lower directions by the substrate 101 and the cladding 106.

Refractive indexes of the first optical waveguide 102, the second optical waveguide 103, and the dielectric layer 104 are greater than refractive indexes of the substrate 101 and the cladding 106. In this way, it can be ensured that light is transmitted in the first optical waveguide 102, the second optical waveguide 103, and the dielectric layer 104, thereby reducing a loss.

In an embodiment, the filter layer 105 is disposed on a right end face of the cladding 106, the dielectric layer 104, and the substrate 101. The "upper" and "right" herein are relative to positions in the accompanying drawings in FIG. 9(a), FIG. 9(b), and FIG. 9(c). FIG. 9(a) to FIG. 9(c) are diagrams of a manufacturing process for an optical chip structure. In other words, the filter layer 105 blocks an optical signal transmission path, so that an optical signal needs to be filtered by the filter layer 105, and an optical signal that meets a requirement is transmitted or reflected. It should be noted that the filter layer 105 needs to cover only an end face of the dielectric layer 104. However, for ease of processing, the filter layer 105 may cover the right end face of all the dielectric layer 104, the substrate 101, and the cladding 106.

In a possible implementation, the dielectric layer 104 is made of at least one of the following: silicon dioxide, lithium niobate, a III-V semiconductor compound, silicon oxynitride, and a polymer.

In a possible implementation, the dielectric layer 104 is made of doped silicon dioxide. An impurity doped in silicon dioxide includes at least one of the following: niobium, antimony, germanium, and phosphorus. A proportion of the doped impurity is not limited herein, and is merely to ensure that the refractive index of the dielectric layer 104 is greater than those of the substrate 101 and the cladding 106.

In an embodiment, the first optical waveguide 102 and the second optical waveguide 103 are made of doped silicon dioxide. An impurity doped in silicon dioxide includes at least one of the following: niobium, antimony, germanium, and phosphorus. A proportion of the doped impurity is not limited herein, and is merely to ensure that the refractive indexes of the first optical waveguide 102 and the second optical waveguide 103 are greater than those of the substrate 101 and the cladding 106.

In a possible implementation, the first optical waveguide 102 and the second optical waveguide 103 may alternatively be made of an electro-optic material with linear electro-optic effect, and the dielectric layer 104 may alternatively be made of lithium niobate, an electro-optic polymer, tantalum niobate, barium titanate, or lead zirconium titanate. For example, the first optical waveguide 102 and the second optical waveguide 103 are made of lithium niobate, a Z crystal axis of lithium niobate crystal is perpendicular to an extension direction of the optical waveguide, and the Z crystal axis of the lithium niobate crystal is a rotational symmetry axis of the lithium niobate crystal. The light is propagated in the optical waveguide in the form of total reflection.

In a possible implementation, the first optical waveguide 102, the second optical waveguide 103, and the dielectric layer 104 may be made of a same material. This may facilitate processing and manufacturing. In other words, the refractive indexes of the first optical waveguide 102, the second optical waveguide 103, and the dielectric layer 104 are the same. Herein, materials of the first optical waveguide 102, the second optical waveguide 103, and the dielectric layer 104 are not described again.

In a possible implementation, the substrate 101 may be made of silicon, lithium niobate, silicon dioxide, quartz, silicon carbide, sapphire, or the like. Certainly, the substrate may alternatively be made of a semiconductor material of another element or compound. The substrate 101 may provide mechanical support, for example, provide mechanical support for the cladding.

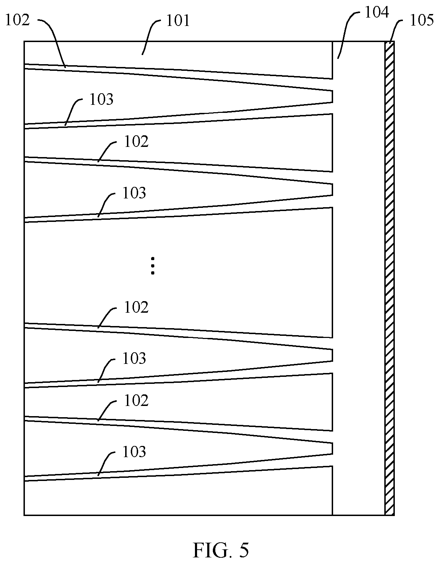

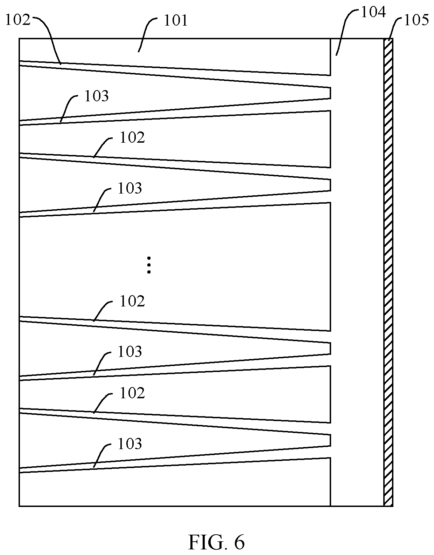

In an implementation, as shown in FIG. 5 to FIG. 8, FIG. 5 to FIG. 8 are diagrams of an optical chip structure with reference to a plurality of optical waveguides. There are a plurality of first optical waveguides 102 and a plurality of second optical waveguides 103, and the plurality of first optical waveguides 102 and the plurality of second optical waveguides 103 are respectively connected to the dielectric layer 104. In other words, the plurality of first optical waveguides 102 and the plurality of second optical waveguides 103 are disposed on the substrate 101 in an array, and all optical waveguides are connected simultaneously through one dielectric layer 104, thereby improving transmission efficiency of optical signals. Herein, a width of the dielectric layer 104 may be greater than a width of all optical waveguides, so as to ensure that different optical waveguides are spaced apart. It should be noted that a quantity of first optical waveguides 102 and a quantity of second optical waveguides 103 are not limited herein.

Optionally, the first optical waveguide 102 and the second optical waveguide 103 may exist in pairs, and the second optical waveguide 103 may transmit an incident optical signal that is reflected by the filter layer 105 and that is of the corresponding first optical waveguide 102.

In an embodiment, as shown in FIG. 3, FIG. 4, FIG. 7, and FIG. 8, FIG. 3, FIG. 4, FIG. 7, and FIG. 8 are structures obtained by packaging an optical array and the foregoing optical waveguides, the optical chip structure further includes a first optical fiber array 107 and a second optical fiber array 108, the first optical fiber array 107 includes a first optical fiber 1071 and a second optical fiber 1072, the first optical fiber 1071 is connected to the first optical waveguide 102, and the second optical fiber 1072 is connected to the second optical waveguide 103. The second optical fiber array 108 includes a third optical fiber 1081, where the third optical fiber 1081 is connected to an end that is of the filter layer 105 and that is away from the first optical waveguide 102, and the third optical fiber 1081 is for transmitting an optical signal transmitted through the filter layer 105.

Herein, an optical signal is input to the first optical waveguide 102 through the first optical fiber array 107. A quantity of first optical fibers 1071 and a quantity of second optical fibers 1072 are not limited herein. The first optical fiber 1071 is correspondingly connected to the first optical waveguide 102, and one first optical fiber 1071 may be connected to one first optical waveguide 102.

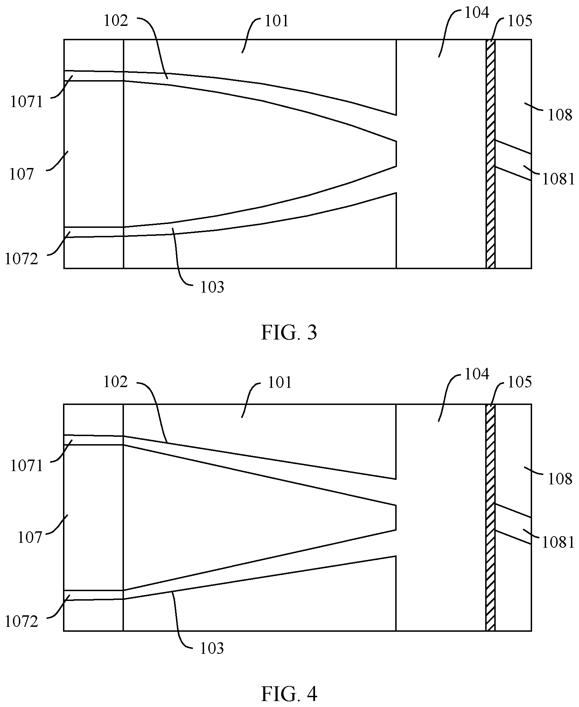

The filter layer 105 reflects all optical signals input by the first optical waveguide 102, and the reflected optical signals are input to the corresponding second optical waveguide 103. Herein, an entrance (the right end of the second optical waveguide 103 in FIG. 3) of the second optical waveguide 103 may correspond to a position of the optical signal reflected by the filter layer 105, to receive the reflected optical signal. An exit (the left end of the second optical waveguide 103 in FIG. 3) of the second optical waveguide 103 may correspond to the second optical fiber 1072, to output an optical signal in the second optical waveguide 103.

It should be noted that the first optical fiber 1071 and the second optical fiber 1072 are essentially the same optical fiber, and are merely for ease of distinguishing and description herein.

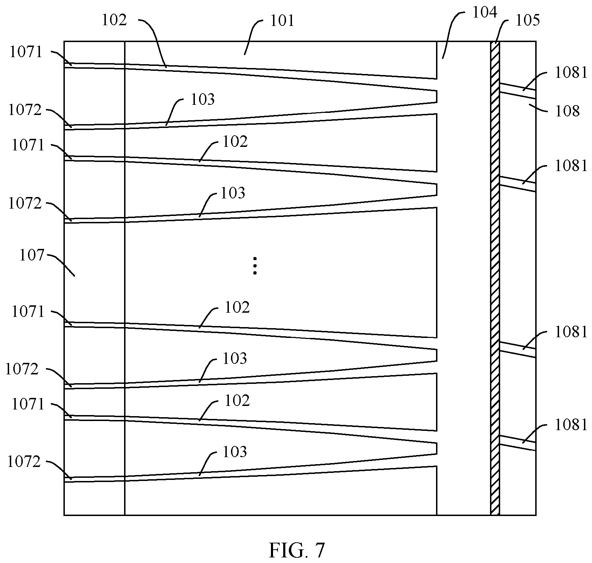

In an optional implementation, a quantity of third optical fibers 1081 may be the same as a quantity of first optical fibers 1071, one third optical fiber 1081 corresponds to one first optical fiber 1071, and an optical signal output by the first optical fiber 1071 may be input to the third optical fiber 1081. As shown in FIG. 7 and FIG. 8, the third optical fiber 1081 may be of an up-down tilt structure, and the third optical fiber 1081 may be parallel to a tangent direction of the exit of the first optical waveguide 102.

In an optional implementation, as shown in FIG. 1(a) and FIG. 1(c), an area of the end that is of the first optical waveguide 102 and that is connected to the dielectric layer 104 is equal to an area of the other end of the first optical waveguide 102. Optionally, as shown in FIG. 1(a), along a propagation direction of an optical signal, a cross-sectional area of the first optical waveguide 102 remains unchanged.

In an optional implementation, as shown in FIG. 1(b) and FIG. 2 to FIG. 4, an area of the end that is of the first optical waveguide 102 and that is connected to the dielectric layer 104 is greater than an area of the other end of the first optical waveguide 102. In other words, along a direction in which an optical signal propagates from the first optical waveguide 102 to the dielectric layer 104, an area of the exit of the first optical waveguide 102 is greater than an area of the entrance. In this way, a spot size of an optical signal can be expanded in the first optical waveguide 102, and spot size expansion of the optical signal in the dielectric layer 104 can be reduced.

Optionally, an area of the exit of the first optical waveguide 102 is not greater than three times an area of the entrance of the first optical waveguide 102. For example, the area of the entrance of the first optical waveguide 102 may be 5 micrometers, and the area of the exit of the first optical waveguide 102 may be 10 micrometers. A size of the first optical waveguide 102 is not limited herein, and is specifically subject to an actual situation.

Optionally, at least a part of the first optical waveguide 102 is in an arc shape or a straight line shape. As shown in FIG. 2, FIG. 4, FIG. 6, and FIG. 8, the first optical waveguide 102 is in the straight line shape. As shown in FIG. 3, FIG. 5, and FIG. 7, the first optical waveguide 102 is in the arc shape. In this way, a transmission path of an optical signal can be increased on a premise of a same chip length.

As shown in FIG. 1(c), the first optical waveguide 102 includes a plurality of optical waveguides that are sequentially connected, including a first segment 1021, a second segment 1022, and a third segment 1023, where the first segment 1021 and the third segment 1023 are straight line segments, and the second segment 1022 is an arc segment. A quantity of segments of the first optical waveguide 102 is not limited herein. Optionally, a bending radius of the arc segment in the first optical waveguide 102 may be greater than 20 mm.

In an optional implementation, as shown in FIG. 1(a) and FIG. 1(c), an area of the end that is of the second optical waveguide 103 and that is connected to the dielectric layer 104 is equal to an area of the other end of the second optical waveguide 103. Optionally, as shown in FIG. 1(a), along a propagation direction of an optical signal, a cross-sectional area of the second optical waveguide 103 remains unchanged.

In an optional implementation, as shown in FIG. 1(b) and FIG. 2 to FIG. 4, an area of the end that is of the second optical waveguide 103 and that is connected to the dielectric layer 104 is greater than an area of the other end of the second optical waveguide 103. In other words, along a direction in which an optical signal is propagated from the dielectric layer 104 to the second optical waveguide 103, an area of an entrance (the right end of the second optical waveguide 103 in FIG. 1(b)) of the second optical waveguide 103 is greater than an area of the entrance. In this way, the spot size of the optical signal can be reduced in the second optical waveguide 103.

Optionally, an area of the entrance of the second optical waveguide 103 is not greater than five times an area of the exit of the second optical waveguide 103. For example, the area of the entrance of the second optical waveguide 103 may be 20 micrometers, and the area of the exit of the second optical waveguide 103 may be 5 micrometers. A size of the second optical waveguide 103 is not limited herein, and is specifically subject to an actual situation.

Optionally, at least a part of the second optical waveguide 103 is in an arc shape or a straight line shape. As shown in FIG. 2, FIG. 4, FIG. 6, and FIG. 8, the second optical waveguide 103 is in the straight line shape. As shown in FIG. 3, FIG. 5, and FIG. 7, the second optical waveguide 103 is in the arc shape. In this way, a transmission path of an optical signal can be increased on a premise of a same chip length.

As shown in FIG. 1(c), the second optical waveguide 103 includes a plurality of optical waveguides that are sequentially connected, including a fourth segment 1031, a fifth segment 1032, and a sixth segment 1033, where the fourth segment 1031 and the sixth segment 1033 are straight line segments, and the fifth segment 1032 is an arc segment. A quantity of segments of the second optical waveguide 103 is not limited herein.

In an implementation, as shown in FIG. 1(b), a cross-sectional area from the end that is of the first optical waveguide 102 and that is connected to the dielectric layer 104 to the other end of the first optical waveguide 102 gradually decreases. In other words, along a direction in which an optical signal is transmitted from the first optical waveguide 102 to the dielectric layer 104, a cross-sectional area of at least one segment of the first optical waveguide 102 gradually increases. In this way, the spot size can be stably expanded in the optical signal propagation process.

In an embodiment, as shown in FIG. 1(b), a cross-sectional area from the end that is of the second optical waveguide 103 and that is connected to the dielectric layer 104 to the other end of the second optical waveguide 103 gradually decreases. In other words, along a transmission direction from the optical signal dielectric layer 104 to the second optical waveguide 103, a cross-sectional area of at least one segment of the second optical waveguide 103 gradually decreases. In this way, stable size reduction in the optical signal propagation process can be implemented.

In an embodiment, as shown in FIG. 1(b), an area of the end that is of the first optical waveguide 102 and that is connected to the dielectric layer 104 is less than an area of the end that is of the second optical waveguide 103 and that is connected to the dielectric layer 104. In other words, an area of the entrance of the second optical waveguide 103 is greater than an area of the exit of the first optical waveguide 102 (the right end of the first optical waveguide 102 in FIG. 1(b)). Such a disposition is that an optical signal emitted through the first optical waveguide 102 to the dielectric layer 104 is diffused, causing spot size expansion. If an area of the entrance of the second optical waveguide 103 is larger, it can be ensured that light reflected by the filter layer 105 is input to the second optical waveguide 103. Optionally, an area of the entrance of the second optical waveguide 103 may be one to three times an area of the exit of the first optical waveguide 102.

In an embodiment, a length of the dielectric layer 104 is less than a Rayleigh distance of a spot of the optical signal transmitted in the dielectric layer 104. The length of the dielectric layer 104 indicates a direction from left to right in FIG. 1(a) to FIG. 10, and the Rayleigh distance indicates a distance of a light beam along a traveling direction of the light beam, extending from a cross section of a waist of the light beam to a cross section whose area is twice the area of the waist of the light beam.

This embodiment provides a manufacturing method for an optical chip structure. Refer to FIG. 11. The method includes the following steps.

S1101: Form a substrate 101.

S1102: Form a first optical waveguide 102, a second optical waveguide 103, and a dielectric layer 104 on a surface of the substrate, where the first optical waveguide 102 and the second optical waveguide 103 are separately connected to a first end of the dielectric layer 104, ends that are of the first optical waveguide 102 and the second optical waveguide 103 and that are connected to the dielectric layer 104 are spaced apart, and a width of the dielectric layer 104 is greater than a width of the first optical waveguide 102 and a width of the second optical waveguide 103.

In a possible implementation, the first optical waveguide 102, the second optical waveguide 103, and the dielectric layer 104 may be deposited on the substrate 101, but efficiency is not high. In a possible implementation, a mask may be formed on the substrate 101, and then the first optical waveguide 102, the second optical waveguide 103, and the dielectric layer 104 are obtained through etching. For example, a process like chemical vapor deposition (chemical vapor deposition, CVD), sputtering, and stripping may be used to form a process.

S1103: Form a cladding 106 on an upper surface of the substrate 101, the first optical waveguide 102, and the second optical waveguide 103 and the dielectric layer 104, where refractive indexes of the first optical waveguide 102, the second optical waveguide 103, and the dielectric layer 104 are greater than refractive indexes of the substrate 101 and the cladding 106. Optionally, the cladding 106 may be formed in a manner of chemical vapor deposition.

S1104: Form a filter layer 105 on an end face of the substrate 101, the dielectric layer 104, and the cladding 106.

In a possible implementation, the filter layer 105 may be formed by using a filter material through chemical vapor deposition, physical vapor deposition PVD (such as electron beam evaporation, magnetron sputtering, or ion beam deposition), or the like. In a possible implementation, the filter layer 105 may be formed on a right end face of the substrate 101, the dielectric layer 104, and the cladding 106 by using an existing TFF sheet.

Optionally, after S1104, the method may further include: connecting the first optical fiber array 107 and the second optical fiber array 108, so that the first optical fiber 1071 of the first optical fiber array 107 is connected to the first optical waveguide 102, the second optical fiber 1072 is connected to the second optical waveguide 103, and the third optical fiber 1081 in the second optical fiber array 108 corresponds to an exit of the first optical waveguide 102.

The foregoing provides specific implementations of this application. It should be understood that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An optical chip structure, comprising a first optical waveguide, a second optical waveguide, a dielectric layer, and a filter layer, wherein the dielectric layer comprises a first end and a second end that are disposed opposite to each other, the first optical waveguide and the second optical waveguide are separately connected to the first end, ends that are of the first optical waveguide and the second optical waveguide and that are connected to the first end are spaced apart, a width of the dielectric layer is greater than a width of the first optical waveguide and a width of the second optical waveguide, the second end of the dielectric layer is plated with the filter layer, the first optical waveguide is for inputting an optical signal, the filter layer is for reflecting an optical signal in a first band and for transmitting an optical signal in a second band, and the second optical waveguide is for transmitting the optical signal reflected by the filter layer.

2. The optical chip structure according to claim 1, further comprising a substrate and a cladding, wherein the first optical waveguide, the second optical waveguide, and the dielectric layer are separately disposed on the substrate, the cladding covers surfaces of the first optical waveguide, the second optical waveguide, and the dielectric layer and is connected to the substrate, and refractive indexes of the first optical waveguide, the second optical waveguide, and the dielectric layer are greater than refractive indexes of the substrate and the cladding.

3. The optical chip structure according to claim 1, wherein an area of the end that is of the first optical waveguide and that is connected to the dielectric layer is greater than an area of the other end of the first optical waveguide.

4. The optical chip structure according to claim 3, wherein a cross-sectional area from the end that is of the first optical waveguide and that is connected to the dielectric layer to the other end of the first optical waveguide gradually decreases.

5. The optical chip structure according to claim 3, wherein a cross-sectional area from the end that is of the second optical waveguide and that is connected to the dielectric layer to the other end of the second optical waveguide gradually decreases.

6. The optical chip structure according to claim 1, wherein an area of the end that is of the first optical waveguide and that is connected to the dielectric layer is less than an area of the end that is of the second optical waveguide and that is connected to the dielectric layer.

7. The optical chip structure according to claim 1, wherein the first optical waveguide, the second optical waveguide, and/or the dielectric layer are/is made of at least one of the following: silicon dioxide, lithium niobate, a III-V semiconductor compound, silicon oxynitride, and a polymer.

8. The optical chip structure according to claim 7, wherein the first optical waveguide, the second optical waveguide, and/or the dielectric layer are/is made of doped silicon dioxide, and an impurity doped in the silicon dioxide comprises at least one of the following: niobium, antimony, germanium, and phosphorus.

9. The optical chip structure according to claim 1, wherein a length of the dielectric layer is less than a Rayleigh distance of an optical signal transmitted in the dielectric layer.

10. The optical chip structure according to claim 1, wherein a spacing between a joint between the first optical waveguide and the dielectric layer and a joint between the second optical waveguide and the dielectric layer is greater than 1 micrometer.

11. The optical chip structure according to claim 1, wherein there are a plurality of first optical waveguides and a plurality of second optical waveguides, and the plurality of first optical waveguides and the plurality of second optical waveguides are separately connected to the dielectric layer.

12. The optical chip structure according to claim 1, further comprising a first optical fiber array and a second optical fiber array, wherein the first optical fiber array comprises a first optical fiber and a second optical fiber, the first optical fiber is connected to the first optical waveguide, and the second optical fiber is connected to the second optical waveguide; and the second optical fiber array comprises a third optical fiber, and the third optical fiber is connected to an end that is of the filter layer and that is away from the first optical waveguide.

13. The optical chip structure according to claim 1, wherein at least a part of the first optical waveguide and/or the second optical waveguide is in an arc shape or a straight line shape.

14. The optical chip structure according to claim 1, wherein the refractive indexes of the first optical waveguide, the second optical waveguide, and the dielectric layer are the same.

15. The optical chip structure according to claim 1, wherein the width of the dielectric layer is greater than or equal to a sum of the width of the first optical waveguide, the width of the second optical waveguide, and a spacing between the first optical waveguide and the second optical waveguide.

16. A manufacturing method for an optical chip structure, comprising:
forming a substrate;
forming a first optical waveguide, a second optical waveguide, and a dielectric layer on a surface of the substrate, wherein the first optical waveguide and the second optical waveguide are separately connected to a first end of the dielectric layer, a width of the dielectric layer is greater than a width of the first optical waveguide and a width of the second optical waveguide, and ends that are of the first optical waveguide and the second optical waveguide and that are connected to the dielectric layer are spaced apart;
forming a cladding on an upper surface of the substrate, the first optical waveguide, the second optical waveguide, and the dielectric layer, wherein refractive indexes of the first optical waveguide, the second optical waveguide, and the dielectric layer are greater than refractive indexes of the substrate and the cladding; and
forming a filter layer on an end face of the cladding.

17. A wavelength division multiplexing system, comprising a signal receiver, a signal transmitter, and the optical chip structure according to any one of claims 1 to 15, wherein the signal receiver receives an optical signal, and couples the optical signal to the optical chip structure, and the signal transmitter is configured to send the optical signal output by the optical chip structure.
